# EUROPEAN PATENT SPECIFICATION

(11) **EP 2 315 491 B1**
(45) Date of publication and mention of the grant of the patent: **16.03.2016**
(21) Application number: 09806363.9
(22) Date of filing: 11.08.2009
(51) Int. Cl.: H04W 64/00, H04W 36/08, H04W 36/14, H04W 36/32, H04W 48/08, H04W 48/18, H04W 48/20

(54) **METHOD FOR SETTING MOTION STATE OF TERMINAL**
VERFAHREN ZUR EINSTELLUNG DES BEWEGUNGSSTATUS EINES ENDGERÄTES
PROCÉDÉ POUR SPÉCIFIER L ÉTAT DE MOUVEMENT D UN TERMINAL

(30) Priority: 11.08.2008 CN 200810210242
(43) Date of publication of application: 27.04.2011
(73) Proprietor: ZTE Corporation, Shenzhen, Guangdong 518057 (CN)
(72) Inventor: WANG, Yaying, Shenzhen Guangdong 518057 (CN); WU, Hao, Shenzhen Guangdong 518057 (CN)
(74) Representative: Haverkamp, Jens
(86) International application number: PCT/CN2009/073183
(87) International publication number: WO 2010/017760

(56) References cited:
- WO-A1-2007/046447
- WO-A1-2008/040962
- CN-A- 1 503 580
- CN-A- 1 575 010
- CN-A- 1 897 736
- US-A1- 2008 036 658
- US-A1- 2008 146 218
- "3rd Generation Partnership Project; Technical Specification Group Radio Access Network; Evolved Universal Terrestrial Radio Access (E-UTRA); User Equipment (UE) procedures in idle mode (Release 8)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.2.0, 1 May 2008 (2008-05-01), pages 1-27, XP050377594,
- HUAWEI: "Consideration on mobility state detection criteria in active mode", 3GPP DRAFT; R2-083553, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Warsaw, Poland; 20080624, 24 June 2008 (2008-06-24), XP050140927, [retrieved on 2008-06-24]

## Description

### TECHNICAL FIELD

The present invention relates to the field of mobile communications, particularly to a method for setting a mobility state of a user equipment.

### BACKGROUND

In a mobile communication system, the speed of a user equipment can influence the quality of service provided by a network, especially in the process of cell reselection or switching, if a user equipment in a high-speed motion adopts control parameters as same as those used for a user equipment in a normal motion, the user equipment may have been out of the coverage of a serving cell before it reselects or switches to a target cell. Thus, in an existing mobile communication system, the cell reselection or switching is performed depending on a mobility state of a user equipment, that is, control parameters of motion speed.

Two evaluation parameters are defined in an existing mobile communication system: T and N. T is a timer used in a mobility state evaluation of a user equipment, and N is a predefined threshold value. In the process of the mobility state evaluation, the user equipment counts the times of the execution of the cell reselection or switching within a time T; if the counted times exceeds N, the user equipment is considered to be in a high-speed mobility state; otherwise, the user equipment is considered to be in a normal mobility state.

However, if the user equipment enters a cell with different evaluation parameters during an evaluation, and if the evaluation parameters are broadcasted in system messages of the cell according to existing protocols, the user equipment will inevitably read new broadcast information when entering the cell, and update the parameters stored in the user equipment. At this time, the user equipment cannot determine whether a mobility state reset is needed as it enters a new cell, additionally, because parameters different from the previous ones are obtained while this mobility state evaluation has not been completed, the setting of a subsequent mobility state of the user equipment cannot be determined either, and as a result, the user equipment cannot determine which kind of parameters (corresponding to a mobility state respectively) should be used during the cell reselection or switching.

WO2008/040962 A1 relates to mobility management in communication systems and specifically discloses both parameters NCR and TCR are reported to the mobile terminal via the BCR (in SIB3 or 4) in each cell and the mobile terminal decides using the number of cell changes (NCR) in time period (TGR) whether it is in a so called "low-mobility" or "high-mobility" state. This document just teaches that the mobility state may be changed as the NCR in TCR is changed, but is silent about how to perform the evaluation process when different evaluation criteria are received.

3GPP TS 36.304 V8.2.0 discloses the definition for the mobility state.

3GPP draft R2-083553 discloses the speed state detection parameters employed in the mobility state evaluation.

### SUMMARY

The technical problem that the present invention intends to resolve is to provide a method for setting a mobility state of a user equipment, which resolves the problem that, in the process of the user equipment performing a mobility state evaluation, the setting of the mobility state of the user equipment cannot be determined because of evaluation parameters changes.

In order to resolve the above-mentioned technical problem, the present invention provides a method for setting a mobility state of a user equipment, which comprises the following steps: if the user equipment receives new evaluation parameters different from currently used evaluation parameters in a current cycle of mobility state evaluation, performing one of the following groups of actions: ending, by the user equipment, the current cycle of mobility state evaluation and adopting the new evaluation parameters to perform a next cycle of mobility state evaluation; or continuing completion of the current cycle of mobility state evaluation by using the new evaluation parameters; when a cycle of mobility state evaluation is completed, setting by the user equipment the mobility state according to the result of the cycle of mobility state evaluation.

Further, the method may also have the following characteristics:
the step that the user equipment continues the completion of the current cycle of mobility state evaluation by using the new evaluation parameters refers to that: the user equipment keeps the current count value of a counter, resets the timing time of a timer to be the difference between a new timing time and the timing time which the timer has currently finished, counts the times of the user equipment performing cell reselection or switching before the reset timing time is reached, stops the timer after the reset timing time is reached, evaluates an obtained count value by using a new threshold value, and sets a corresponding mobility state according to the result of the evaluation.

Further, the method may also have the following characteristics:
the timer is stopped when the new timing time is not greater than the timing time which the timer has currently finished.

Further, the method may also have the following characteristics:
time parameters contained in the evaluation parameters comprise trigger time and delay time; and
the completion of the mobility state evaluation refers to the reaching of the time timed by the timer for the trigger time, or the reaching of the time timed by the timer for the delay time.

In order to resolve the above-mentioned technical problem, the present invention further provides a method for setting a mobility state of a user equipment, which comprises the following steps: if the user equipment receives new evaluation parameters different from currently used evaluation parameters in a current cycle of mobility state evaluation, setting by the user equipment the mobility state to be a normal mobility state as specified in UMTS/LTE standards, continuing completion of the current cycle of mobility state evaluation by adopting the evaluation parameters used for the current cycle of mobility state evaluation, and then performing a next cycle of mobility state evaluation by using the evaluation parameters newly received during the current cycle of mobility state evaluation, and when a cycle of mobility state evaluation is completed, setting by the user equipment the mobility state according to the result of the cycle of mobility state evaluation.

Further, the method may also have the following characteristics:
time parameters contained in the evaluation parameters comprise trigger time and delay time; and
the completion of the current cycle of mobility state evaluation refers to the reaching of the time timed by the timer for the trigger time, or the reaching of the time timed by a timer for the delay time.

In order to resolve the above-mentioned technical problem, the present invention further provides a method for setting a mobility state of a user equipment, which comprises the following steps: if the user equipment receives new evaluation parameters different from currently used evaluation parameters in a current cycle of mobility state evaluation, and a heterogeneous cell reselection occurs, converting by the user equipment the mobility state according to a corresponding relation, and performing one of the following groups of actions: continuing completion of the current cycle of mobility state evaluation by adopting the evaluation parameters used for the current cycle of mobility state evaluation, and then performing a next cycle of mobility state evaluation by using the new evaluation parameters; or ending the current cycle of mobility state evaluation and performing the next cycle of mobility state evaluation by using the new evaluation parameters; or continuing the completion of the current cycle of mobility state evaluation by using the new evaluation parameters; and when a cycle of mobility state evaluation is completed, setting by the user equipment the mobility state according to the result of the cycle of mobility state evaluation, the corresponding relation refers to that a high-speed mobility state in a universal mobile telecommunications system (UMTS) is corresponding to a high-speed or medium-speed mobility state in a long term evolution (LTE) system, and that a normal mobility state in a UMTS is corresponding to that in an LTE system.

Further, the method may also have the following characteristics:
the step that the user equipment continues the completion of the current cycle of mobility state evaluation by using the new evaluation parameters refers to that: the user equipment keeps the current count value of a counter, resets the timing time of a timer to be the difference between a new timing time and the timing time which the timer has currently finished, counts the times of the user equipment performing cell reselection or switching before the reset timing time is reached, stops the timer after the reset timing time is reached, evaluates an obtained count value by using a new threshold value, and sets a corresponding mobility state according to the result of the evaluation.

Further, the method may also have the following characteristics:
the timer is stopped when the new timing time is not greater than the timing time which the timer has currently finished.

Further, the method may also have the following characteristics:
time parameters contained in the evaluation parameters comprise trigger time and delay time; and
the completion of the current cycle of mobility state evaluation refers to the reaching of the time timed by a timer for the trigger time, or the reaching of the time timed by a timer for the delay time.

According to the method for setting a mobility state of a user equipment in the present invention, in the process of the user equipment performing a mobility state evaluation, control processing can be effectively performed when evaluation parameters are changed, so as to avoid the problem that the setting of the mobility state of the user equipment cannot be determined.

### BRIEF DESCRIPTION OF THE DRAWINGS

Fig.1 is a flowchart of a method for controlling a mobility state evaluation of a user equipment according to a first embodiment of the present invention;
Fig.2 is a flowchart of a method for controlling a mobility state evaluation of a user equipment according to a second embodiment of the present invention;
Fig.3 is a flowchart of a method for controlling a mobility state evaluation of a user equipment according to a third embodiment of the present invention;
Fig.4 is a flowchart of a method for controlling a mobility state evaluation of a user equipment according to a fourth embodiment of the present invention;
Fig.5 is a flowchart of a method for controlling a mobility state evaluation of a user equipment according to a fifth embodiment of the present invention; and
Fig.6 is a flowchart of a method for controlling a mobility state evaluation of a user equipment according to a sixth embodiment of the present invention.

### DETAILED DESCRIPTION

The present invention provides a method for setting a mobility state of a user equipment, the basic conception of which lies in that: when the user equipment receives different evaluation parameters during the process of performing a mobility state evaluation, the user equipment explicitly defines the setting of the current mobility state and a method of a following mobility state evaluation, so as to avoid the problem that the setting of the mobility state of the user equipment cannot be determined.

Currently, the evaluation parameters for the user equipment to perform a mobility state evaluation are generally included in system messages of a cell, and sometimes in measurement control signaling distributed by a network side, thus, the user equipment can obtain the evaluation parameters when reading the system messages of the cell or receiving the measurement control signaling distributed by the network side. The parameters for the mobility state evaluation comprise trigger time Tmax, delay time Thyst, high speed threshold value Nh and medium speed threshold value Nm.

However, in some cases the user equipment may obtain new evaluation parameters which are not totally identical to the ones adopted for the current mobility state evaluation. For example, in the process of the user equipment performing a mobility state evaluation, when cell reselection occurs in an idle mode, as a new cell may use different evaluation parameters, the user equipment may obtain evaluation parameters which are not totally identical to the currently used evaluation parameters when reading the system messages of the reselected new cell; or when the user equipment receives measurement control signaling distributed by the network side in a connection mode, as a cell which is switched to may adopt different evaluation parameters, the evaluation parameters contained in the control signaling distributed by the network side may not be totally identical to the current ones; or when the user equipment initiates a service under the control of the network side and enters a connection mode from an idle mode, as in the connection mode the system may use parameters different from those used in the idle mode, the evaluation parameters contained in the control signaling distributed by the network side may not be totally identical to the current ones; or when the user equipment ends a service and enters an idle mode from a connection mode, as in the idle mode the network may use parameters different from those used in the connection mode, evaluation parameters contained in cell information read by the user equipment in the idle mode may not be totally identical to the current ones. At this time, the user equipment is required to specify the setting of the current mobility state and a method for a following mobility state evaluation so that the user equipment can determine which kind of parameters (corresponding to a mobility state respectively) should be used during cell reselection or switching.

### Embodiment 1

If switching occurs between different modes, especially from an idle mode to a connection mode, when a user equipment receives new evaluation parameters which are not totally identical to the current ones, the parameters currently set for the mobility state of the user equipment have little reference value in evaluating a following mobility state because parameters configured by a network side for a cell are generally much different in different modes, and the user equipment has a relatively high requirement on the quality of services in a connection mode. Considering the situation above, preferably, an embodiment of the present invention recommends, but not in a limiting way, setting the mobility state of the user equipment to be a normal mobility state after new evaluation parameters which are not totally identical to the current ones are received.

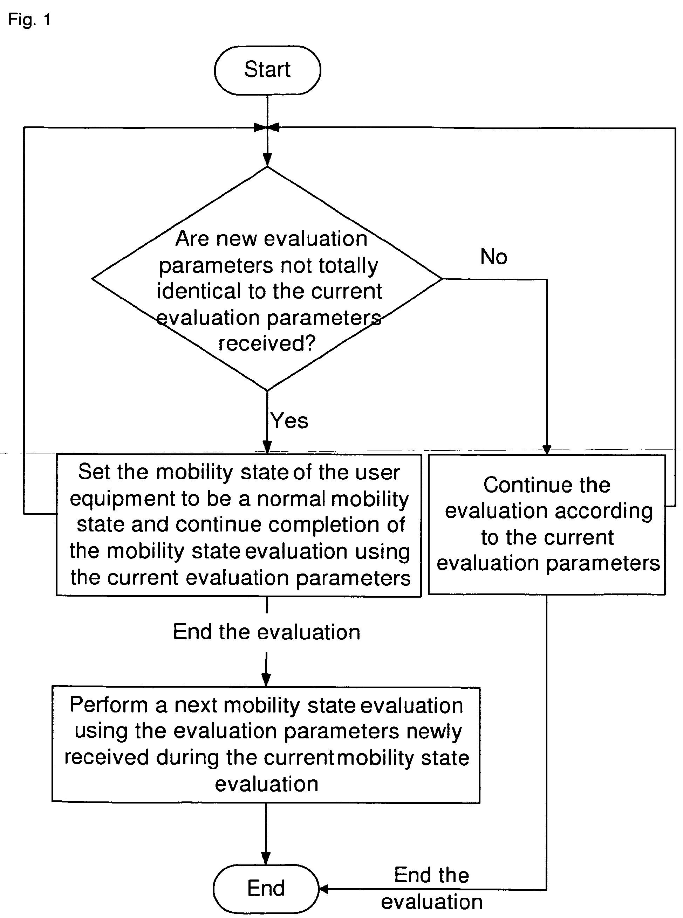

Referring to Fig.1, if switching between different modes occurs when the user equipment receives new evaluation parameters which are not totally identical to the current ones, the user equipment sets the current mobility state to be a normal mobility state, keeps the current count value of a counter and the remaining timing time of a timer, performs no evaluation parameter update, and continues the completion of the mobility state evaluation by using the current evaluation parameters.

Assuming that the evaluation parameters used in the current mobility state evaluation performed by the user equipment are as follows: trigger time Tmax1, delay time Thyst1, high speed threshold vale Nh1, and medium speed threshold value Nm1. In a complete mobility state evaluation, the user equipment activates a timer after a mobility state evaluation is triggered, the timing time is Tmax1, and a counter can be used before the trigger time is reached to count the times the user equipment performs cell reselection or switching; the timer and the counter are stopped when the trigger time is reached, and the high speed threshold value Nh1 and the medium speed threshold value Nm1 are used to evaluate a count value of the counter. In particular, the user equipment is determined to be in a medium speed mobility state if the count value of the counter is greater than or equal to the medium speed threshold value Nm1 but smaller than the high speed threshold value Nh1; the user equipment is determined to be in a high speed mobility state if the count value of the counter is greater than or equal to the high speed threshold value Nh1; and the user equipment is determined to be in a normal mobility state if the count value of the counter is smaller than the medium speed threshold value Nm1. It should be noted here that: if the mobility state currently kept by the user equipment is a normal state, a corresponding mobility state is set according to the result of the evaluation, otherwise, a corresponding mobility state is set according to the result of the evaluation when the result of the evaluation is medium speed or high speed. However, when the result of the evaluation is normal, the user equipment reactivates the timer, setting a timing time as Thyst1, continues counting the times the user equipment performs cell reselection or switching within the delay time Thyst1, evaluates the sum of the count values obtained within the time Tmax1 and the time Thyst1, and sets a corresponding mobility state according to the result of the evaluation.

No influence is caused to the evaluation if the user equipment receives new evaluation parameters which are not totally identical to the current ones during the evaluation process.

After the evaluation is completed, the evaluation parameters are updated to be the evaluation parameters newly received before the completion of the mobility state evaluation, and a following mobility state evaluation is performed by using the updated evaluation parameters.

### Embodiment 2

If no switching occurs between different modes when a user equipment receives new evaluation parameters which are not totally identical to the current ones, the current mobility state have certain reference value in evaluating a following mobility state because parameters configured by a network side for a cell are generally little different in the same mode. Considering the situation above, preferably, an embodiment of the present invention recommends, but not in a limiting way, keeping the current mobility state of the user equipment after the new evaluation parameters are received.

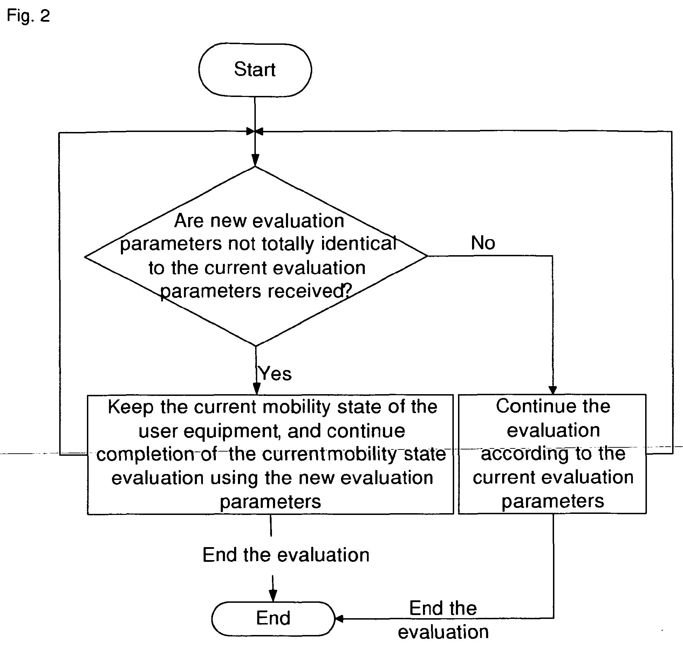

Referring to Fig.2, if no mode switching occurs when the user equipment receives new evaluation parameters which are not totally identical to the current ones, the user equipment keeps the current mobility state, reserves the current count value of a counter, updates the evaluation parameters with the new ones, and continues the completion of the mobility state evaluation by using the updated evaluation parameters.

Considering that the mobility state evaluation has not been completed when the new evaluation parameters are received, the currently finished evaluation is used as one part of the mobility state evaluation and still has certain reference value, thus, the finished evaluation is kept, that is, the current count value of a counter and the timing time a timer has finished are kept, wherein the timing time the timer has finished is the difference between the timing time before the update and the current remaining timing time of the timer; the evaluation parameters are updated with the new ones, the timing time of the timer is reset according to an updated timing time, which is the difference between the updated timing time and the timing time the timer has currently finished; the counting for the times of cell reselection or switching the user equipment carries out is continued before the reset timing time is reached; the timer is stopped after the reset timing time is reached; an obtained count value is evaluated by using an updated threshold value, and corresponding processing is performed according to the result of the evaluation. As the timer may be timing for the trigger time or the delay time when the new evaluation parameters are received, the following two cases should be considered respectively.

If the timer is timing for the trigger time Tmax1 when the user equipment receives the new evaluation parameters (trigger time Tmax2, delay time Thyst2, high speed threshold value Nh2, and medium speed threshold value Nm2), the current remaining timing time of the timer is x, and the current count value of the counter is y, then the timing time of the timer is reset to be the difference between the updated trigger time Tmax2 and the timing time the timer has currently finished, while the timing time the timer has currently finished is the difference between the trigger time Tmax1 before the update and the current remaining timing time x of the timer, evaluation parameters are updated, and the subsequent part of the mobility state evaluation is performed according to the updated evaluation parameters. Preferably, it can be determined whether the updated trigger time Tmax2 is greater than the timing time the timer has currently finished before the reset of the timing time of the timer; if the result of the determination is that the updated trigger time Tmax2 is not greater than the timing time the timer has currently finished, the timer is stopped, the updated high speed threshold value Nh2 and the medium speed threshold value Nm2 are adopted to evaluate the current count value y of the counter. In particular, the mobility state of the user equipment is determined to be medium speed if the count value y of the counter is greater than or equal to the medium speed threshold value Nm2 but smaller than the high speed threshold value Nh2; the mobility state of the user equipment is determined to be high speed if the count value y of the counter is greater than or equal to the high speed threshold value Nh2; and the mobility state of the user equipment is determined to be normal if the count value y of the counter is smaller than the medium speed threshold value Nm2. If the result of the determination is that the updated trigger time Tmax2 is greater than the timing time the timer has currently finished, the counting for the times of cell reselection or switching the user equipment carries out is continued before the reset timing time is reached, the timer is stopped after the reset timing time is reached, and the updated high speed threshold value Nh2 and the medium speed threshold value Nm2 are adopted to evaluate the count value of the counter. It should be noted here that: if the mobility state currently kept by the user equipment is a normal state, a corresponding mobility state is set according to the result of the evaluation; otherwise, a corresponding mobility state is set according to the result of the evaluation when the result of the evaluation is medium speed or high speed; however, when the result of the evaluation is normal, the user equipment reactivates the timer, setting a timing time as Thyst2, continues counting the times the user equipment performs cell reselection or switching within the delay time Thyst2, evaluates the sum of the count values obtained within the time Tmax2 and the time Thyst2, and sets a corresponding mobility state according to the result of the evaluation.

Assuming that the timer is timing for the delay time Thyst1 when the user equipment receives the new evaluation parameters (trigger time Tmax2, delay time Thyst2, high speed threshold value Nh2, and medium speed threshold value Nm2), the current remaining timing time of the timer is x, and the current count value of the counter is y, then by using the method above, the timing time of the timer is reset to be the difference between the updated delay time Thyst2 and the timing time the timer has currently finished, while the timing time the timer has currently finished is the difference between the delay time Thyst1 before the update and the current remaining timing time x of the timer, the evaluation parameters are updated, and the subsequent part of the mobility state evaluation is performed according to the updated evaluation parameters. The timer is stopped after the reset timing time is reached, and the updated high speed threshold value Nh2 and the medium speed threshold value Nm2 are adopted to evaluate the count value of the counter, and a corresponding mobility state is set according to the result of the evaluation; preferably, it can be determined whether the updated delay time Thyst2 is greater than the delay time the timer has currently finished before the reset of the timing time, if the result of the determination is that the updated delay time Thyst2 is not greater than the delay time the timer has currently finished, the timer is stopped; otherwise, the timing time of the timer is reset according to the method above, and the evaluation is continued within the reset timing time.

### Embodiment 3

If no switching occurs between different modes when a user equipment receives new evaluation parameters which are not totally identical to the current ones, the current mobility state have certain reference value in a following mobility state evaluation because parameters configured by a network side for a cell are generally little different in the same mode. Considering the situation above, preferably, an embodiment of the present invention recommends, but not in a limiting way, keeping the current mobility state of the user equipment after the new evaluation parameters are received.

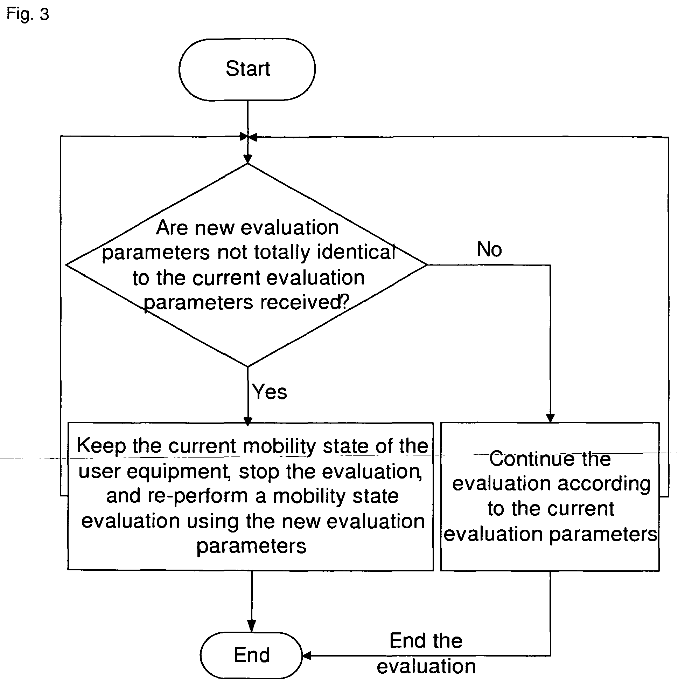

Referring to Fig.3, if no mode switching occurs when the user equipment receives new evaluation parameters which are not totally identical to the current ones, the user equipment keeps the current mobility state, resets a count value and a timer, ends the mobility state evaluation, updates evaluation parameters with the received new evaluation parameters, and re-performs a mobility state evaluation by using the updated evaluation parameters. The method for re-performing a mobility state evaluation by using new evaluation parameters is the same as that described in the embodiment 1, so no more description is given here.

### Embodiment 4

If cell reselection occurs in a different system when a user equipment receives new evaluation parameters which are not totally identical to the current ones, parameters configured by a network side for a cell are generally much different because systems are different, and in a long term evolution (LTE) system the mobility states of a user equipment are divided into high speed, medium speed and normal, and in a universal mobile telecommunications system (UMTS) the mobility states of the user equipment are divided into high speed and normal. Considering the situation above, preferably, an embodiment of the present invention recommends, but not in a limiting way, the user equipment to perform a mobility state conversion according to a corresponding relation if reselection occurs in a different system after the new evaluation parameters which are not totally identical to the current ones are received.

The corresponding relation refers to that: a high-speed mobility state in the UMTS is corresponding to a high-speed or medium-speed mobility state in the LTE system, and a normal mobility state in the UMTS is corresponding to that in the LTE system. In particular, for example, when the user equipment switches cell reselection from the UMTS to the LTE system, according to the corresponding relation above, the state value high speed in the UMTS can be converted to the state value high speed in the LTE system, and the state value normal speed in the UMTS can be converted to the state value normal speed in the LTE system; or the state value high speed in the UMTS can be converted to the state value medium speed in the LTE system, and the state value normal speed in the UMTS is converted to the state value normal speed in the LTE system; for another example, when the user equipment switches cell reselection from the LTE system to the UMTS, according to the corresponding relation above, the state values high speed and medium speed in the LTE system can be converted to the state value high speed in the UMTS, and the state value normal in the LTE system can be converted to the state value normal in the UMTS. Wherein the state values are descriptions for the mobility states of the user equipment, which can be enumerative types, such as high speed, medium speed and normal.

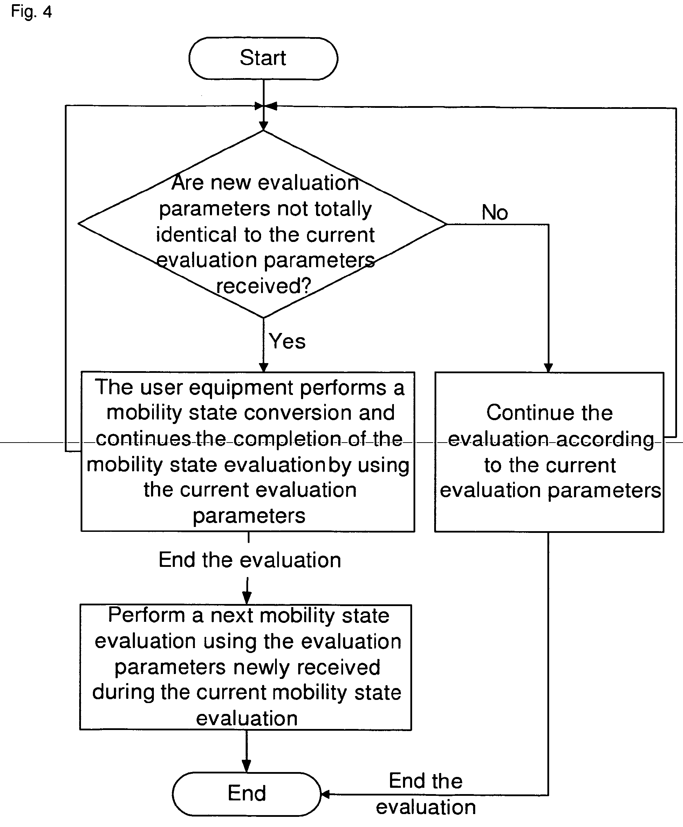

Referring to Fig.4, if cell reselection occurs in a different system when the user equipment receives new evaluation parameters which are not totally identical to the current ones, the user equipment performs a mobility state conversion according to the mobility state conversion method above, keeps the current count value of a counter and the remaining timing time of a timer, updates no evaluation parameter, and continues the completion of the mobility state evaluation by using the current evaluation parameters.

The user equipment performs a mobility state evaluation according to the method given in the first embodiment, and no influence is caused to the evaluation if new evaluation parameters which are not totally identical to the current ones are received during the mobility state evaluation. After the mobility state evaluation is completed, the evaluation parameters are updated to be the evaluation parameters newly received before the completion of the mobility state evaluation, and a following mobility state evaluation is performed by using the updated evaluation parameters.

### Embodiment 5

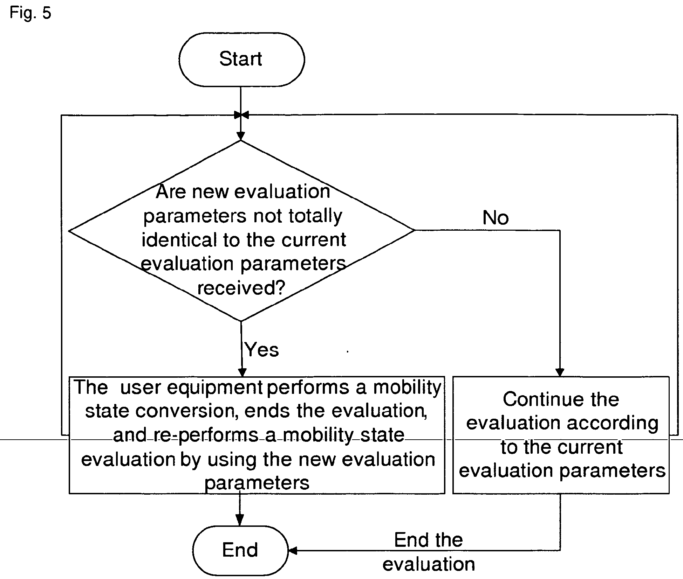

Referring to Fig.5, in the process of a user equipment performing a mobility state evaluation, if cell reselection occurs in a different system when the user equipment receives new evaluation parameters which are not totally identical to the currently used evaluation parameters, the user equipment may perform a mobility state conversion according to the mobility state conversion method of the fourth embodiment, and at the same time, the user equipment resets a count value and a timer, ends the mobility state evaluation, and then updates the evaluation parameters with the received new evaluation parameters, and re-performs a mobility state evaluation by using the updated evaluation parameters.

The method for re-performing a mobility state evaluation method by using new evaluation parameters is the same as that described in the first embodiment, so no more description is given here.

### Embodiment 6

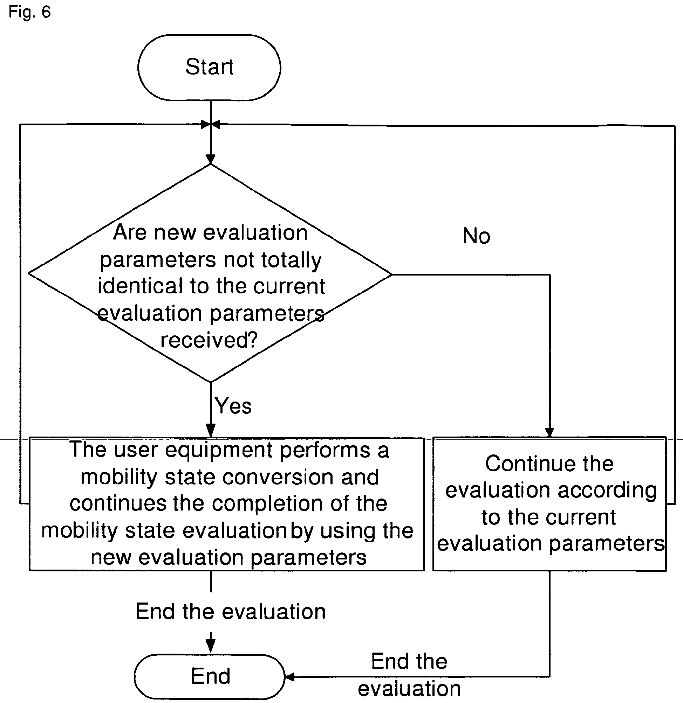

Referring to Fig.6, in the process of a user equipment performing a mobility state evaluation, if cell reselection occurs in a different system when the user equipment receives new evaluation parameters which are not totally identical to the currently used evaluation parameters, the user equipment may perform a mobility state conversion according to the mobility state conversion method of the fourth embodiment, and at the same time, the user equipment keeps the current count value of a counter, updates the evaluation parameters with the new ones, and continues the completion of the mobility state evaluation by using the updated evaluation parameters.

Considering that the mobility state evaluation has not been completed when the new evaluation parameters are received, the currently finished evaluation is used as one part of the mobility state evaluation and still has certain reference value, thus, the finished evaluation is kept, that is, the current count value of the counter is kept, the timing time of the timer is reset according to the method of the second embodiment, the counting for the times of the cell reselection or switching the user equipment carries out is continued before the reset timing time is reached, the timer is stopped after the reset timing time is reached, and an evaluation and corresponding processing are performed on an obtained count value by using updated threshold values.

Of course, the present invention may have many other embodiments, various modifications and variations can be devised by those skilled in the art without departing from the scope of the present invention, and it should be understood that these modifications and variations belong to the protection scope of the claims in the present invention.

### INDUSTRIAL APPLICABILITY

In a method for setting a mobility state of a user equipment provided in the present invention, the user equipment can perform control processing effectively when evaluation parameters are changed during performing a mobitity state evaluation, so as to avoid the problem that the setting of the mobility state of the user equipment cannot be determined.

## Claims

1. A method for setting a mobility state of a user equipment, comprising:
if the user equipment receives new evaluation parameters different from currently used evaluation parameters in a current cycle of mobility state evaluation, **characterized in that**,
performing one of the following groups of actions:
ending, by the user equipment, the current cycle of mobility state evaluation and adopting the new evaluation parameters to perform a next cycle of mobility state evaluation; or
continuing completion of the current cycle of mobility state evaluation by using the new evaluation parameters, and
when a cycle of mobility state evaluation is completed, setting by the user equipment the mobility state according to the result of the cycle of mobility state evaluation.

2. The method according to claim 1, wherein
the step that the user equipment continues the completion of the current cycle of mobility state evaluation by using the new evaluation parameters refers to that: the user equipment keeps the current count value of a counter, resets the timing time of a timer to be the difference between a new timing time and the timing time which the timer has currently finished, counts the times of the user equipment performing cell reselection or switching before the reset timing time is reached, stops the timer after the reset timing time is reached, evaluates an obtained count value by using a new threshold value, and sets a corresponding mobility state according to the result of the evaluation.

3. The method according to claim 2, wherein
the timer is stopped when the new timing time is not greater than the timing time which the timer has currently finished.

4. The method according to claim 1, wherein
time parameters contained in the evaluation parameters comprise trigger time and delay time; and
the completion of the mobility state evaluation refers to the reaching of the time timed by a timer for the trigger time, or the reaching of the time timed by a timer for the delay time.

5. A method for setting a mobility state of a user equipment comprising:
if the user equipment receives new evaluation parameters different from currently used evaluation parameters in a current cycle of mobility state evaluation, **characterized in that**, setting by the user equipment the mobility state to be a normal mobility state as specified in UMTS/LTE standards, continuing completion of the current cycle of mobility state evaluation by adopting the evaluation parameters used for the current cycle of mobility state evaluation, and then performing a next cycle of mobility state evaluation by using the evaluation parameters newly received during the current cycle of mobility state evaluation, and
when a cycle of mobility state evaluation is completed, setting by the user equipment the mobility state according to the result of the cycle of mobility state evaluation.

6. The method according to claim 5, wherein
time parameters contained in the evaluation parameters comprise trigger time and delay time; and
the completion of the current cycle of mobility state evaluation refers to the reaching of the time timed by a timer for the trigger time, or the reaching of the time timed by a timer for the delay time.

7. A method for setting a mobility state of a user equipment, comprising:
if the user equipment receives new evaluation parameters different from currently used evaluation parameters in a current cycle of mobility state evaluation, **characterized in that**, and a heterogeneous cell reselection occurs, converting by the user equipment the mobility state according to a corresponding relation,
performing one of the following groups of actions:
continuing completion of the current cycle of mobility state evaluation by adopting the evaluation parameters used for the current cycle of mobility state evaluation, and then performing a next cycle of mobility state evaluation by using the new evaluation parameters; or
ending the current cycle of mobility state evaluation and performing the next cycle of mobility state evaluation by using the new evaluation parameters; or
continuing the completion of the current cycle of mobility state evaluation by using the new evaluation parameters; and
when a cycle of mobility state evaluation is completed, setting by the user equipment the mobility state according to the result of the cycle of mobility state evaluation, then converting the mobility state due to a heterogeneous cell reselection,
wherein the corresponding relation refers to that:
a high-speed mobility state in a universal mobile telecommunications system (UMTS) is corresponding to a high-speed or medium-speed mobility state in a long term evolution (LTE) system, and that
a normal mobility state in a UMTS is corresponding to that in an LTE system.

8. The method according to claim 7, wherein
the step that the user equipment continues the completion of the current cycle of mobility state evaluation by using the new evaluation parameters refers to that: the user equipment keeps the current count value of a counter, resets the timing time of a timer to be the difference between a new timing time and the timing time which the timer has currently finished, counts the times of the user equipment performing cell reselection or switching before the reset timing time is reached, stops the timer after the reset timing time is reached, evaluates an obtained count value by using a new threshold value, and sets a corresponding mobility state according to the result of the evaluation.

9. The method according to claim 8, wherein
the timer is stopped when the new timing time is not greater than the timing time which the timer has currently finished.

10. The method according to claim 7, wherein
time parameters contained in the evaluation parameters comprise trigger time and delay time; and
the completion of the current cycle of mobility state evaluation refers to the reaching of the time timed by a timer for the trigger time, or the reaching of the time timed by a timer for the delay time.

## Patentansprüche

1. Verfahren zum Einstellen eines Mobilitätszustands eines Benutzergeräts, umfassend:
wenn das Benutzergerät neue Auswertungsparameter empfängt, die sich von derzeitig verwendeten Auswertungsparametern in einem aktuellen Mobilitätszustand-Auswertungszyklus unterscheiden, **gekennzeichnet durch** Ausführen einer der folgenden Gruppen von Handlungen:
Beenden, **durch** das Benutzergerät, des aktuellen Mobilitätszustand-Auswertungszyklus' und Übernehmen der neuen Auswertungsparameter, um einen nächsten Mobilitätszustand-Auswertungszyklus durchzuführen; oder
Fortsetzen der Durchführung des aktuellen Mobilitätszustand-Auswertungszyklus' **durch** Verwenden der neuen Auswertungsparameter, und wenn ein Mobilitätszustand-Auswertungszyklus durchgeführt ist, Einstellen, **durch** das Benutzergerät, des Mobilitätszustands entsprechend dem Ergebnis des Durchlaufs von Mobilitätszustand-Auswertung.

2. Verfahren nach Anspruch 1, wobei der Schritt, dass das Benutzergerät die Durchführung des aktuellen Mobilitätszustand-Auswertungszyklus' durch Verwenden der neuen Auswertungsparameter fortsetzt, sich darauf bezieht, dass: das Benutzergerät verwaltet den aktuellen Zählwert eines Zählers, stellt die Zeitnehmer-Zeit eines Zeitnehmers neu ein, so dass sie die Differenz zwischen einer neuen Zeitnehmer-Zeit und der Zeitnehmer-Zeit, die der Zeitnehmer aktuell beendet hat, ist, zählt die Male, die das Benutzergerät Zellen-Neuwahl oder -Umschaltung durchführt , bevor die neu eingestellte Zeitnehmer-Zeit erreicht ist, hält den Zeitnehmer an, nachdem die neu eingestellte Zeitnehmer-Zeit erreicht ist, wertet einen erhaltenen Zählwert unter Verwendung eines neuen Grenzwerts aus, und stellt einen entsprechenden Mobilitätszustand entsprechend dem Ergebnis der Auswertung ein.

3. Verfahren nach Anspruch 2, wobei der Zeitnehmer gestoppt wird, wenn die neue Zeitnehmer-Zeit nicht größer ist als die Zeitnehmer-Zeit, die der Zeitnehmer aktuell beendet hat.

4. Verfahren nach Anspruch 1, wobei Zeitparameter, die in den Auswertungsparametern enthalten sind, eine Trigger-Zeit und eine Verzögerungszeit umfassen; und die Durchführung der Mobilitätszustand-Auswertung sich auf das Erreichen der von einem Zeitnehmer für die Trigger-Zeit bestimmte Zeit bezieht, oder das Erreichen der von einem Zeitnehmer für die Verzögerungszeit bestimmte Zeit.

5. Verfahren zum Einstellen eines Mobilitätszustands eines Benutzergeräts, umfassend:
wenn das Benutzergerät in einem aktuellen Mobilitätszustand-Auswertungszyklus neue Auswertungsparameter empfängt, die sich von aktuell verwendeten Auswertungsparametern unterscheiden, **gekennzeichnet durch**:
Einstellen, **durch** das Benutzergerät, des Mobilitätszustands auf einen normalen Mobilitätszustand, wie in UMTS/LTE-Standards definiert, fortsetzen der Durchführung des aktuellen Durchlaufs von Mobilitätszustand-Auswertung **durch** Übernehmen der Auswertungsparameter, die für den aktuellen Durchlauf von Mobilitätszustand-Auswertung verwendet werden, und danach Durchführen eines nächsten Durchlaufs von Mobilitätszustand-Auswertung **durch** Verwenden der Auswertungsparameter, die während des aktuellen Durchlaufs von Mobilitätszustand-Auswertung neu empfangen wurden, und wenn ein Durchlauf von Mobilitätszustand-Auswertung durchführt ist, einstellen, **durch** das Benutzergerät, des Mobilitätszustands entsprechend dem Ergebnis des Durchlaufs von Mobilitätszustand-Auswertung.

6. Verfahren nach Anspruch 5, wobei Zeitparameter, die in den Auswertungsparametern enthalten sind, Trigger-Zeit und Verzögerungszeit umfassen; und die Durchführung des aktuellen Durchlaufs von Mobilitätszustand-Auswertung sich auf das Erreichen der von einem Zeitnehmer für die Trigger-Zeit bestimmte Zeit bezieht, oder das Erreichen der von einem Zeitnehmer für die Verzögerungszeit bestimmte Zeit.

7. Verfahren zum Einstellen eines Mobilitätszustands eines Benutzergeräts, umfassend:
wenn das Benutzer Gerät während eines aktuellen Durchlaufs von Mobilitätszustand-Auswertung neue Auswertungsparameter empfängt, die sich von aktuell verwendeten Auswertungsparametern unterscheiden, **dadurch gekennzeichnet, dass** eine heterogene Zellen-Neuwahl stattfindet, ein Umwandeln, durch das Benutzergerät, des Mobilitätszustands gemäß einer entsprechenden Relation, Durchführen einer der folgenden Gruppen von Handlungen:
Fortsetzen der Durchführung des aktuellen Durchlaufs von Mobilitätszustand-Auswertung durch Übernehmen der für den aktuellen Durchlauf von Mobilitätszustand-Auswertung verwendeten Auswertungsparameter, und danach Durchführen eines nächsten Durchlaufs von Mobilitätszustand-Auswertung unter Verwendung der neuen Auswertungsparameter; oder
Beenden des aktuellen Mobilitätszustand-Auswertungszyklus' und Durchführen des nächsten Mobilitätszustand-Auswertungszyklus' durch Verwenden der neuen Auswertungsparameter; oder
Fortsetzen der Durchführung des aktuellen Durchlaufs von Mobilitätszustand-Auswertung unter Verwendung der neuen Auswertungsparameter; und wenn ein Durchlauf von Mobilitätszustand-Auswertung durchführt ist, einstellen, durch das Benutzergerät, des Mobilitätszustands entsprechend dem Ergebnis des Durchlaufs von Mobilitätszustand-Auswertung, danach Umwandeln des Mobilitätszustands aufgrund einer heterogenen Zellen-Neuwahl, wobei sich die entsprechende Relation darauf bezieht, dass:
ein Mobilitätszustand hoher Geschwindigkeit in einem Universal-Mobile-Telecommunications-System (UMTS) einem Mobilitätszustand mit hoher Geschwindigkeit oder mit mittlerer Geschwindigkeit in einem Long-Term-Evolution (LTE) System entspricht, und dass ein normaler Mobilitätszustand in einem UMTS dem in einem LTE-System entspricht.

8. Verfahren nach Anspruch 7, wobei der Schritt, dass das Benutzergerät die Durchführung des aktuellen Durchlaufs von Mobilitätszustand-Auswertung unter Verwendung der neuen Auswertungsparameter fortsetzt, sich darauf bezieht, dass: das Benutzergerät verwaltet den aktuellen Zählwert eines Zählers, stellt die Zeitnehmer-Zeit eines Zeitnehmers neu ein, so dass sie die Differenz zwischen einer neuen Zeitnehmer-Zeit und der Zeitnehmer-Zeit, die der Zeitnehmer aktuell beendet hat, ist, zählt die Male, die das Benutzergerät Zellen-Neuwahl oder -Umschaltung durchführt , bevor die neu eingestellte Zeitnehmer-Zeit erreicht ist, hält den Zeitnehmer an, nachdem die neu eingestellte Zeitnehmer-Zeit erreicht ist, wertet einen erhaltenen Zählwert unter Verwendung eines neuen Grenzwerts aus, und stellt einen entsprechenden Mobilitätszustand entsprechend dem Ergebnis der Auswertung ein.

9. Verfahren nach Anspruch 8, wobei der Zeitnehmer gestoppt wird, wenn die neue Zeitnehmer-Zeit nicht größer ist als die Zeitnehmer-Zeit, die der Zeitnehmer aktuell beendet hat.

10. Verfahren nach Anspruch 7, wobei Zeitparameter, die in den Auswertungsparametern enthalten sind, eine Trigger-Zeit und eine Verzögerungszeit umfassen; und die Durchführung der Mobilitätszustand-Auswertung sich auf das Erreichen der von einem Zeitnehmer für die Trigger-Zeit bestimmte Zeit bezieht, oder das Erreichen der von einem Zeitnehmer für die Verzögerungszeit bestimmte Zeit.

## Revendications

1. Procédé pour spécifier l'état de mouvement d'un terminal, comportant :
si le terminal reçoit de nouveaux paramètres d'évaluation différents des paramètres d'évaluation en cours d'utilisation dans un cycle d'évaluation de l'état de mouvement en cours, **caractérisé en ce qu'**on réalise l'un des groupes suivants d'action :
le terminal met fin au cycle d'évaluation de l'état de mouvement en cours et adopte les nouveaux paramètres d'évaluation pour réaliser un cycle suivant d'évaluation de l'état de mouvement, ou
le terminal poursuit la réalisation du cycle d'évaluation de l'état de mouvement en cours en adoptant les nouveaux paramètres d'évaluation, et lorsque un cycle d'évaluation de l'état de mouvement est achevé, le terminal ajuste l'état de mouvement en fonction des résultats du cycle d'évaluation de l'état de mouvement.

2. Le procédé selon la revendication 1, dans lequel,
l'étape au cours de laquelle le terminal poursuit la réalisation du cycle d'évaluation de l'état de mouvement en cours en utilisant les nouveaux paramètres d'évaluation se base sur ce qui suit : le terminal conserve les valeurs de comptage actuelles d'un compteur, réinitialise la durée de chronométrage d'une horloge pour être la différence entre une nouvelle durée de chronométrage et la durée de chronométrage que l'horloge a actuellement terminé, décompte les temps mis par l'équipement pour réaliser une re-sélection de cellules ou commuter avant que l'horaire de réinitialisation soit atteint, arrête l'horloge après que l'horaire de réinitialisation ait été atteint, évalue une valeur de comptage obtenue en utilisant une nouvelle valeur de seuil, et fixe un état de mouvement correspondant en fonction des résultats de l'évaluation.

3. Le procédé selon la revendication 2, dans lequel, l'horloge est arrêtée lorsque la nouvelle durée de chronométrage n'est pas supérieure à la durée que l'horloge vient de terminer.

4. Le procédé selon la revendication 1, dans lequel les paramètres de temps contenus dans les paramètres d'évaluation comportent un horaire de déclenchement et un horaire de retardement et, la réalisation de l'évaluation de l'état de mouvement se réfère à un horaire à atteindre fixé par une horloge pour l'horaire de déclenchement ou un horaire à atteindre fixé par l'horloge pour l'horaire de retardement.

5. Un procédé pour spécifier l'état de mouvement d'un terminal comportant :
si le terminal reçoit de nouveaux paramètres d'évaluation différents des paramètres d'évaluation en cours d'utilisation dans un cycle d'évaluation de l'état de mouvement en cours, **caractérisé en ce que** le terminal fixe l'état de mouvement en tant qu'état de mouvement normal conformément aux standards UMTS/LTE, on poursuit la réalisation du cycle d'évaluation d'un état de mouvement en cours en adoptant les paramètres dévaluation utilisés par le cycle d'évaluation de l'état de mouvement en cours et on réalise un nouveau cycle d'évaluation de l'état de mouvement en utilisant les nouveaux paramètres d'évaluation reçus pendant le cycle d'évaluation de l'état de mouvement en cours, et lorsqu'un cycle d'évaluation de l'état de mouvement est achevé, le terminal spécifie l'état de mouvement en fonction des résultats du cycle d'évaluation de l'état de mouvement.

6. Le procédé selon la revendication 5, dans lequel les paramètres de temps contenus dans les paramètres d'évaluation comportent un horaire de déclenchement et un horaire de retardement, et la réalisation du cycle d'évaluation de l'état de mouvement en cours se réfère à un horaire à atteindre fixé par une horloge pour l'horaire de déclenchement ou à un horaire à atteindre fixé par une horloge pour l'horaire de retardement.

7. Un procédé pour spécifier l'état de mouvement d'un terminal comportant :
si le terminal reçoit de nouveaux paramètres d'évaluation différents des paramètres d'évaluation en cours d'utilisation dans un cycle d'évaluation de l'état de mouvement en cours, **caractérisé en ce qu'**une re-sélection de cellule hétérogène se produit, et le terminal convertit l'état de mouvement en fonction d'une relation correspondante,
on réalise au moins l'un des groupes suivants d'action, on poursuit la réalisation du cycle d'évaluation de l'état de mouvement en cours en adoptant les paramètres d'évaluation utilisés, pour le cycle d'évaluation de l'état de mouvement en cours, et
on réalise ensuite un nouveau cycle d'évaluation de l'état de mouvement en utilisant les nouveaux paramètres d'évaluation,
ou on termine le cycle d'évaluation de l'état de mouvement en cours et on réalise un nouveau cycle d'évaluation de l'état de mouvement en utilisant les nouveaux paramètres d'évaluation, ou
on poursuit la réalisation du cycle d'évaluation de l'état de mouvement en cours en utilisant les nouveaux paramètres d'évaluation, et lorsqu'un cycle d'évaluation de l'état de mouvement est terminé, le terminal spécifie l'état de mouvement en fonction des résultats du cycle d'évaluation de l'état de mouvement, puis convertit l'état de mouvement résultant d'une re sélection de cellule hétérogène, dans lequel la relation correspondante se réfère à :
un état de mouvement à haute vitesse dans un système de télécommunication mobile universelle (UMTS) correspond à un état de mouvement moyen ou élevé dans un système d'évolution à long terme (LTE), et
un état de mouvement normal dans un UMTS correspond à celui d'un système LTE.

8. Le procédé selon la revendication 7, dans lequel l'étape au cours de laquelle le terminal poursuit la réalisation du cycle d'évaluation de l'état de mouvement en cours en utilisant les nouveaux paramètres d'évaluation se réfère à : le terminal conserve les valeurs de comptage actuelles d'un compteur, réinitialise la durée de chronométrage d'une horloge pour être la différence entre une nouvelle durée de chronométrage et la durée de chronométrage que l'horloge a actuellement terminé, décompte les temps mis par l'équipement pour réaliser une re-sélection de cellules ou commuter avant que l'horaire de réinitialisation soit atteint, arrête l'horloge après que l'horaire de réinitialisation ait été atteint, évalue une valeur de comptage obtenue en utilisant une nouvelle valeur de seuil, et fixe un état de mouvement correspondant en fonction des résultats de l'évaluation.

9. Le procédé selon la revendication 8, dans lequel l'horloge est arrêtée lorsque la nouvelle durée de chronométrage n'est pas supérieure à la durée que l'horloge vient de terminer.

10. Le procédé selon la revendication 7, dans lequel les paramètres de temps contenus dans les paramètres d'évaluation comportent un horaire de déclenchement et un horaire de retardement et, la réalisation de l'évaluation de l'état de mouvement se réfère à un horaire à atteindre fixé par une horloge pour l'horaire de déclenchement ou un horaire à atteindre fixé par l'horloge pour l'horaire de retardement.
